# EUROPEAN PATENT SPECIFICATION

(11) **EP 2 396 866 B1**
(45) Date of publication and mention of the grant of the patent: **03.04.2013**
(21) Application number: 10706570.8
(22) Date of filing: 12.02.2010
(51) Int. Cl.: H02J 3/38, H02J 3/18, H01F 27/00

(54) **AC-CONNECTION OF AN OFF-SHORE WIND-PARK TO AN ON-SHORE ELECTRICITY GRID AND BOOSTER TRANSFORMER FOR PROVIDING SUCH AN AC-CONNECTION**
WECHSELSTROMVERBINDUNG EINES OFFSHORE-WINDPARKS MIT EINEM ONSHORE-STROMNETZ UND BOOSTER-TRANSFORMATOR ZUR BEREITSTELLUNG EINER SOLCHEN WECHSELSTROMVERBINDUNG
CONNEXION CA D'UN PARC D'ÉOLIENNES EN MER À UN RÉSEAU ÉLECTRIQUE À TERRE ET TRANSFORMATEUR RELAIS POUR FOURNIR UNE TELLE CONNEXION CA

(30) Priority: 12.02.2009 EP 09152673
(43) Date of publication of application: 21.12.2011
(73) Proprietor: Viserge Ltd., Dublin 2 (IE)
(72) Inventor: VAN DYCK, Marc, B-1880 Kapelle-op-den-Bos (BE); LEURIDAN, Koen, B-3200Aarschot (BE)
(74) Representative: Gyi, Jeffrey Ivan
(86) International application number: PCT/EP2010/051808
(87) International publication number: WO 2010/092158

(56) References cited:
- EP-A- 1 508 951
- WO-A-2004/025803
- WO-A-2007/111541
- WO-A-2008/039121
- DE-A1-102005 043 422

## Description

### TECHNICAL FIELD

The present invention relates to booster transformer for coupling an AC-connection of an off-shore wind-park to an on-shore electricity grid with a high-voltage switch-gear, comprising an intermediate circuit operating at medium-voltage, said intermediate circuit comprises an energy dissipating element switchable between an operational and non-operational condition.

The present invention also relates to an AC-connection of an off-shore wind-park to an onshore electricity grid. The AC-connection is configured and coupleable to the on-shore electricity grid so that it meets the requirements imposed by the operator of the on-shore electricity grid. The invention further relates to a device to control the voltage and current transients when establishing an AC-connection between an off-shore wind-park and an on-shore electricity grid. The present invention further relates to a method for switching-in and operating an off-shore wind-park coupleable/coupled to an on-shore electricity grid. The invention further relates to the use of such a device and to the use of an AC-connection.

### BACKGROUND

Off-shore wind-parks are increasingly used to generate electrical power. The electrical power produced is fed to an on-shore electricity grid. An operator of an on-shore electricity grid imposes specific demands on its suppliers. Specifically, the off-shore wind-park coupleable/coupled to the on-shore electricity grid must meet imposed plant capability curves. Plant capability curves define the range of reactive power in function of active power output of the wind-park, considering the expected voltage variations of the electricity grid.

Particularly at switching-in, current and voltage transients can arise that are disturbing to the operation of the on-shore electricity grid. Hence, the demand on power quality is required not only during operation, but also at switching-in of a wind-park and its connecting sea-cable, to an on-shore electricity grid.

Traditionally the plant capability curve is met with the installation of separate Static VAR devices, based on power electronics. However, power electronics are vulnerable, especially for off-shore use.

Furthermore, on-shore components have to meet local legislation on environmental impact from substations, especially noise.

WO 2008/039121 describes an off-shore wind power plant. WO 2004/025803 describes a wind power fed electric network. These documents do not address active and reactive power production capabilities to provide a plant capability curve as imposed by an onshore electricity grid.

DE 10043422 describes an off-shore wind-park connection to an electricity grid. WO 2007/111541 describes a device and a method for control of power flow in a transmission line. These documents however, remain silent about a booster transformer provided with an energy dissipating element, in particular a reactance, for acting on high-voltage switch-gear.

In view of the above, it is clear that a connection of an off-shore wind-park to an on-shore electricity grid must be designed to meet a multiple of requirements. There remains a need in the art for an improved connection of an off-shore wind-park to an on-shore electricity grid, which overcomes at least some of the above-mentioned problems.

### SUMMARY

The present invention relates to a method for switching-in an electricity grid of an off-shore wind park to an on-shore electricity grid, to a booster transformer modified for switching-in an electricity grid of an off-shore wind park to an on-shore electricity grid according to the claims.

The present invention is further directed to a device for controlling the voltage and current transients when establishing said AC-connection. The invention is further directed to the use and operation of said device.

In a further aspect, the present invention provides a booster transformer, said booster transformer comprises an intermediate circuit operating at medium-voltage, said intermediate circuit comprises an energy dissipating element switchable between an operational and non-operational condition.

Such a booster transformer has the advantage that it can be used for both raising or lowering the voltage of an electric circuit prior to its passage towards the on-shore grid through the high voltage circuit-breaker and to dampen current and voltage transients when closing the circuit-breaker to establish a coupling between the AC-connection and the on-shore electricity grid.

The term *"booster transformer"* refers to an electric transformer used to regulate the voltage of an electric circuit. The term *"switch-gear"* refers to an electrical switch-gear installation, in particular high-voltage switch-gear. Preferably, a high-voltage circuit-breaker is used as switch-gear.

In another example, the present invention provides the use of a booster transformer according to the invention, as means for switching-in an AC-connection to an on-shore electricity grid.

The use of such a booster transformer has for effect that current and voltage transients are dampened. Use of a booster transformer according to the invention provides a soft-closing scheme for connecting the off-shore wind-park to the on-shore electricity grid, whereby voltage and current transients are properly controlled.

The term *"switching-in"* in this context means making a connection through the manipulation of a switch-gear installation, e.g. by closing a high-voltage circuit-breaker so that an AC-connection is established between an off-shore wind-park and an on-shore electricity grid.

In another example the present invention provides a method for switching-in an AC-connection to an on-shore electricity grid with a booster transformer as described above, said method comprises the steps of:
- connecting an on-shore substation to a high-voltage switch-gear in an open position,
- connecting said high-voltage switch-gear on its opposite side to an on-shore electricity grid,
- connecting said on-shore substation to an off-shore wind-park,
- inserting said booster transformer between said high-voltage switch-gear and said offshore wind-park,
- bringing said energy dissipating element in an operational condition,
- closing said high-voltage switch-gear,
- bringing said energy dissipating element in a non-operational condition.

With this method damping is provided to suppress the transients caused by the unfavorable switching-in of the capacitive sea-cable. This results in significant advantages in terms of the elimination or at least significant reduction of voltage and current transients in the network, as well as in terms of limiting electrodynamic and thermal stresses, with significant consequent benefits both for the insulation systems of the components present in the electrical system and of the switch-gear used, considerably increasing its useful life.

The invention relates to a method for switching-in an off-shore electricity grid of an offshore wind-park to an on-shore electricity grid, comprising the steps of:
- providing a booster transformer comprising an energy dissipating element in an intermediate circuit, wherein said energy dissipating element is switchable between an operational and non-operational condition and said intermediate circuit is operable at medium-voltage,
- connecting said booster transformer at its primary side to a sea-cable for transporting electricity produced in said off-shore wind-park to said on-shore electricity grid,
- connecting said booster transformer at its secondary side to a high-voltage switch-gear, wherein said high-voltage switch-gear is in an open position,
- connecting said high-voltage switch-gear to said on-shore electricity grid,
- switching said energy dissipating element to an operational condition,
- bringing said high-voltage switch-gear in a closed position,
- bringing said energy dissipating element in a non-operational condition, thereby providing said off-shore wind-park switched-in to said on-shore electricity grid.

In an embodiment of the above described method, the method comprises the step of providing said booster transformer in an on-shore substation.

In an example the method for switching-in an off-shore electricity grid of an off shore wind-park to an on-shore electricity grid, comprises the steps of:
- providing a booster transformer comprising an energy dissipating element in an intermediate circuit, wherein said energy dissipating element is switchable between an operational and non-operational condition and said intermediate circuit operates at medium-voltage,
- connecting said booster transformer at its primary side to a sea-cable for transporting electricity produced in said off-shore wind-park to said on-shore electricity grid,
- connecting said booster transformer at its secondary side to a high-voltage switch-gear, wherein said high-voltage switch-gear is in an open position,
- connecting said high-voltage switch-gear to said on-shore electricity grid,
- switching said energy dissipating element to an operational condition,
- bringing said high-voltage switch-gear in a closed position,
- bringing said energy dissipating element in a non-operational condition, thereby providing said off-shore wind-park switched-in to said on-shore electricity grid.

The invention further relates to a booster transformer for switching-in an off-shore electricity grid of an off-shore wind-park to an on-shore electricity grid, wherein said booster transformer is connectable at its primary side to a sea-cable for transporting electricity produced in said off-shore wind-park to said on-shore electricity grid and at its secondary side connectable to a high-voltage switch-gear, said switch-gear in a closed position connects said off-shore wind park to said on-shore electricity grid, characterized in that, said booster transformer comprises an energy dissipating element in an intermediate circuit, wherein said energy dissipating element is switchable between an operational and non-operational condition and said intermediate circuit operates at medium-voltage.

In an example of the above described booster transformer, said booster transformer is connected at its primary side to a sea-cable for transporting electricity produced in said off-shore wind-park to said on-shore electricity grid and at its secondary side is connected to a high-voltage switch-gear, said switch-gear in a closed position connects said off-shore wind park to said on-shore electricity grid, characterized in that, said booster transformer comprises an energy dissipating element in an intermediate circuit, wherein said energy dissipating element is switchable between an operational and non-operational condition and said intermediate circuit operates at medium-voltage.

In an example of the above described booster transformer, said energy dissipating element is an alternating current (AC) resistance.

In an example of the above described booster transformer, at least two mediums voltage circuit-breakers are provided in said intermediate circuit for switching said energy dissipating element between an operational and non-operational condition.

In an example of the above described booster transformer, said booster transformer comprises an on-load tap changer.

With the insight to better show the characteristics of the invention, some preferred embodiments and examples are described hereafter referring to the enclosed figures.

### FIGURE LEGEND

**Figure 1** shows a single line diagram representing an embodiment of an AC-connection according to the present invention.
**Figure 2** represents a booster transformer according to the prior art.
**Figure 3** represents an example of a booster transformer according to the present invention. The circuit-breakers in the booster transformer are represented in the condition before switch-in of a sea-cable and off-shore wind-park to an on-shore electricity grid.
**Figure 4** represents an example of a booster transformer according to the present invention, switched to a transition situation.
**Figure 5** represents an example of a booster transformer according to the present invention, in its normal operating condition. That is, the AC-connection is switched-in to the on-shore electricity grid.

### DETAILED DESCRIPTION OF THE INVENTION

Before the present methods and devices used in the invention are described, it is to be understood that this invention is not limited to particular methods, components, or devices described, as such methods, components, and devices may, of course, vary. It is also to be understood that the terminology used herein is not intended to be limiting, since the scope of the present invention will be limited only by the appended claims. As used herein, the singular forms "a", "an", and "the" include both singular and plural referents unless the context clearly dictates otherwise.

The terms "comprising", "comprises" and "comprised of'' as used herein are synonymous with "including", "includes" or "containing", "contains", and are inclusive or open-ended and do not exclude additional, non-recited members, elements or method steps. The terms "comprising", "comprises" and "comprised of" also include the term "consisting of"'.

The recitation of numerical ranges by endpoints includes all numbers and fractions subsumed within the respective ranges, as well as the recited endpoints.

The term, "about" as used herein when referring to a measurable value such as a parameter, an amount, a temporal duration, and the like, is meant to encompass variations of +/-10% or less, preferably +/-5% or less, more preferably +/-1 % or less, and still more preferably +/-0.1 % or less of and from the specified value, insofar such variations are appropriate to perform in the disclosed invention. It is to be understood that the value to which the modifier "about" refers is itself also specifically, and preferably, disclosed.

All documents cited in the present specification are hereby incorporated by reference in their entirety.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

### AC-connection

By the term *"shunt-reactor"* is meant a reactor that has a relatively high inductance and is wound on a magnetic core containing an air gap; used to neutralize the charging current of the line to which it is connected.

By the term *"on-load tap changer"* it is meant, a device comprising a connection point along a transformer winding that allows a certain number of turns to be selected. By means of a tap changer, a transformer with a variable turns ratio is produced enabling voltage regulation of the output. On-load tap changers (OLTC) allow for automatic voltage adjustment and function as a voltage regulator.

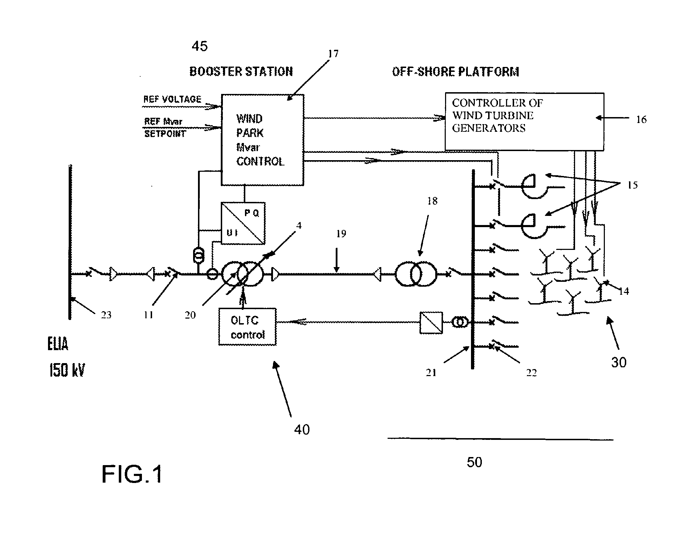

An example of an ac-connection of an off-shore wind-park is schematically illustrated in **Figure 1**.

Wind turbine generators 14 in an off-shore wind-park 50 are connected to an off-shore medium-voltage grid 21 via medium-voltage circuit-breakers 22. A power step-up transformer 18 links the off-shore medium-voltage grid 21 to the high-voltage sea-cable 19. In an on-shore substation 45, a modified booster transformer 20 with on-load tap changer (OLTC) 4 connects the sea-cable 19 with a high-voltage utility grid 23 via a high-voltage circuit-breaker 11. The high-voltage circuit-breaker 11 between a booster transformer 20 and the utility grid is the only high-voltage switch-gear needed in an AC-connection according to the invention. The required generation or absorption of reactive power Mvar comes from the Mvar capability of the wind turbine generators 14, the sea-cable 19 and one or more off-shore medium-voltage shunt reactors 15.

The sea-cable 19, typically operating at high-voltage for example 150 kV, is connected directly and without high-voltage circuit-breaker to the secondary side of the power step-up transformer 18. The primary side of the step-up transformer 18 is connected to the offshore medium-voltage grid 21, typically 36 kV or less, via a medium-voltage circuit-breaker 22. The wind turbine generators 14 deliver their power to this medium-voltage grid 21. The main power step-up transformer 18 has a fixed ratio, without on-load tap changer. On the off-shore platform 30, one or more conventional shunt-reactors 15 are connected to the medium-voltage grid 21 with medium-voltage circuit-breakers 22.

### Booster transformer according to the invention

In another aspect, the present invention provides a booster transformer that comprises an intermediate circuit operating at medium-voltage, said intermediate circuit comprises an energy dissipating element switchable between an operational and non-operational condition.

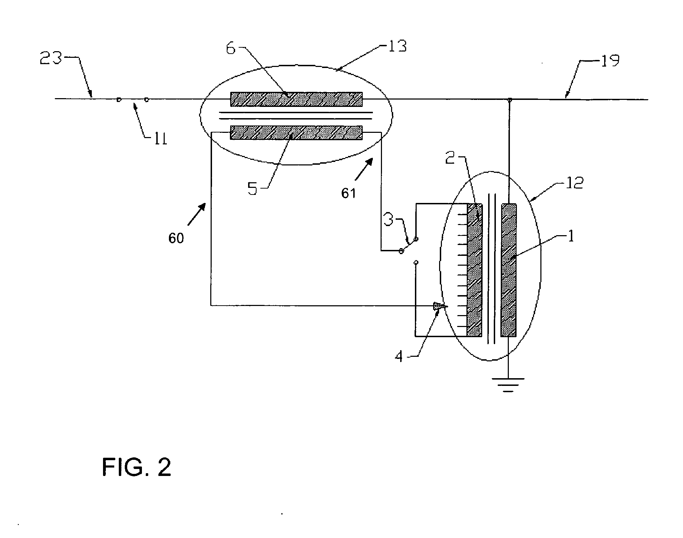

**Figure 2** represents a booster transformer according to the state-of-the art. It consists of two active parts: an exciting transformer 12 and a series transformer 13, each with a primary and secondary winding. The primary winding 1 of the exciting transformer 12 is directly connected to the high-voltage sea-cable 19. The secondary winding 2 of the exciting transformer 12 is a tapped winding. The selection of a tap on the tapped winding 2 is made with the on-load tap changer 4 in function of the regulation of the voltage level on the off-shore medium-voltage grid. The tapped winding 2 feeds the primary winding 5 of the series transformer 13. The secondary winding 6 of the series transformer 13 is connected between the on-shore high-voltage electricity grid 23 and the sea-cable 19. In function of the position of the preselector 3, also part of the on-load tap changer 4, the voltage induced on the winding 6 can be increased or decreased.

The inventors were able to modify a conventional booster transformer so that it can be used to control the voltage and current transients after switching-in of an AC-connection between the on-shore electricity grid and a wind-park.

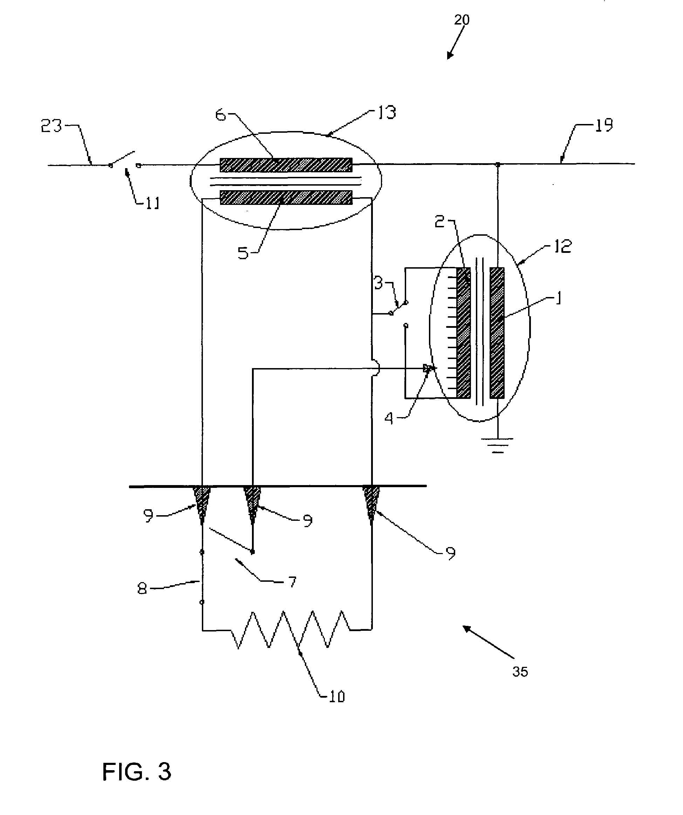

An example of a preferred example is schematically illustrated in **Figure 3**. A booster transformer 20 according to the invention can be obtained as follows: the circuit of a booster transformer according to the state-of-the art is opened between the lines 60, 61 connecting the primary winding 5 of the series transformer 13 with the tapped winding 2 of the exciting transformer 12. The circuit is brought outside a tank with medium-voltage bushings 9. An intermediate circuit comprising energy dissipating element 10 and two circuit-breakers 7, 8 is inserted between the series transformer 13 and the exciting transformer 12. A first and second bushing connected with a first circuit-breaker 7, are inserted in the circuit connecting the primary winding 5 of the series transformer 13 to the on-load tap changer 4. The first bushing is connected to a resistor 10 with a second circuit-breaker 8. The resistor is connected in series to a third bushing 9. The third bushing 9 is connected to the circuit running from the primary winding of the series transformer 13 to the preselector 3. The energy dissipating element 10 will add the necessary dissipation to limit the magnitude and duration of transients after switching-in. Two medium-voltage circuit-breakers 7, 8 control the insertion of the energy dissipating element 10 into the intermediate circuit. It can now be used to raise the voltage of an electric circuit and to dampen current and voltage transients.

### Use of booster transformer according to the invention

In another aspect, the present invention provides the use of a booster transformer according to the invention, to control the voltage and current transients after switching-in of an AC-connection to an on-shore electricity grid. With a booster transformer according to an embodiment of the invention, a soft closing of a high-voltage circuit-breaker is obtained, by only adding medium-voltage equipment. In the invention the intermediate circuit at medium-voltage, comprising an energy dissipating element such as a resistor, realizes the soft-closing of the high-voltage circuit-breaker. Current and voltage transients caused by switching-in are reduced to the limits imposed by the voltage and current protection of the electrical system.

Without a booster transformer according to an embodiment of the invention, such a damping could only be realized by the temporary insertion of high-voltage resistors in the high-voltage connection between sea-cable and on-shore grid. The cost of such a solution is however much higher: because of the high-voltage class of resistors and switch-gear but also because of the important space requirements to install these high-voltage components in the on-shore substation.

By the term "reactive power producing capability limit of the generators" is meant the range of capacitive or inductive reactive power that the generators can produce in function of the active power output.

### Method for switching-in an AC-connection according to the invention

In yet another aspect, the present invention provides a method for switching-in an AC-connection 40 to an on-shore electricity grid 23 with a booster transformer 20 according to the invention.

Medium-voltage resistors are temporarily inserted into an intermediate circuit 35 using relatively cheap medium-voltage circuit-breakers. As an effect excessive current and voltage transients after switching in the off-shore wind-park 50 and its AC-connection (sea-cable, transformers, reactors and wind turbine generators) are suppressed. For the steady-state operation of the AC-connection, the resistors are automatically taken out of the circuit by proper switching of the breakers. The method is illustrated in **Figure 3** to **5****.**

The breakers in **Figure 3** are represented in the condition before switch-in of the sea-cable and off-shore wind-park 50. High-voltage breaker 11 is open. Medium-voltage breaker 7 is open and breaker 8 is closed. An inrush current will flow through the winding 6 after closing of the breaker 11. It will induce a current through the winding 5 and through the energy dissipating element 10.

The voltage class of the windings 2, 5, connecting the two active parts, is optimized in function of the selection of the on-load tap changer 4. It will typically be a medium-voltage class, not above 36 kV. The selection of medium-voltage class components for the intermediate circuit 35 of the booster transformer 20 is highly beneficial. It creates the possibility for a very cost effective implementation of a soft-closing system to reduce the size and the duration of current and voltage transients after connection to the grid of the mainly capacitive sea-cable and the inductive components (main step-up transformer and shunt-reactors) on the off-shore platform.

The problem is that a smooth inrush of the inductive components requires a controlled switching-in at the peak of the voltage but unfortunately, this is the worst condition to switch in the capacitive sea-cable. A good compromise is not possible. The invention therefore foresees to apply switching at peak voltage and to provide sufficient damping to suppress the transients caused by the unfavorable switching-in of the capacitive sea-cable.

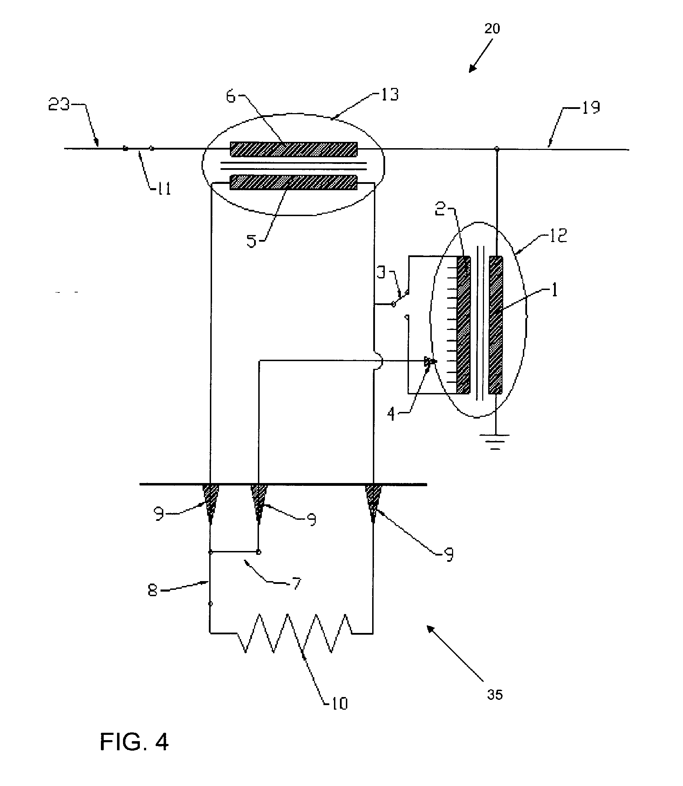

Shortly after the inrush, the installation will switch to the situation represented in **Figure 4****.** The high-voltage breaker 11 and the medium-voltage breaker 7 are closed.

The short passage through the make-before-break condition represented in **Figure 4** is essential to maintain a path for the current induced through the primary winding 5 of the series transformer 13.

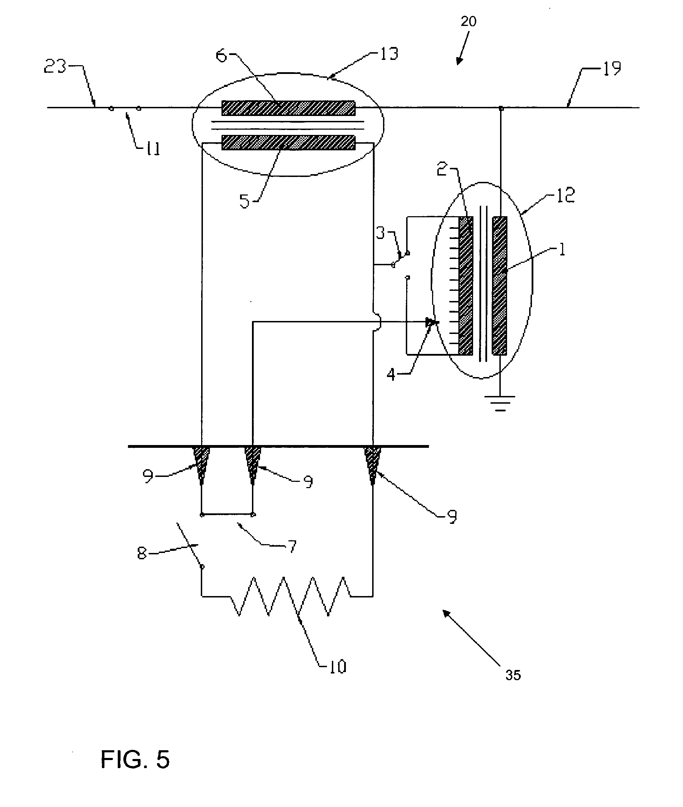

Finally, breaker 8 opens, isolating the energy dissipating element 10, preferably a resistor, from the booster transformer circuit. The booster transformer 20 as represented in Figure 5 is now in its normal operating condition. The off-shore wind-park 50 is coupled to the onshore electricity grid 23 using a booster transformer 20 according to an embodiment of the invention.

In a preferred example of the invention, the method further comprises a switching-in at peak voltage to establish an AC-connection.

## Claims

1. Method for switching-in an off-shore electricity grid (21) of an off-shore wind-park (50) to an on-shore electricity grid (23), comprising the steps of:
- providing a booster transformer (20) comprising an energy dissipating element (10) in an intermediate circuit (35), wherein said energy dissipating element (10) is switchable between an operational and non-operational condition and said intermediate circuit (35) is operable at medium-voltage,
- connecting said booster transformer (20) at its primary side to a sea-cable (19) for transporting electricity produced in said off-shore wind-park (50) to said on-shore electricity grid (23),
- connecting said booster transformer (20) at its secondary side to a high-voltage switch-gear (11), wherein said high-voltage switch-gear (11) is in an open position,
- connecting said high-voltage switch-gear (11) to said on-shore electricity grid (23), **characterized in that** it further comprises the steps of :
- switching said energy dissipating element (10) to an operational condition,
- bringing said high-voltage switch-gear (11) in a closed position,
- bringing said energy dissipating element (10) in a non-operational condition, thereby providing said off-shore wind-park (50) switched-in to said on-shore electricity grid (23).

2. Method according to claim 1, comprising the step of providing said booster transformer (20) in an on-shore substation (45).

## Patentansprüche

1. Verfahren zum Zuschalten eines Offshore-Stromnetzes (21) eines Offshore-Windparks (50) zu einem Onshore-Stromnetz (23), die folgenden Schritte umfassend:
- Bereitstellen eines Hilfstransformators (20), welcher ein Energieverteilungselement (10) in einer Zwischenschaltung (35) umfasst, wobei das Energieverteilungselement (10) zwischen einem funktionsfähigen und einem nicht funktionsfähigen Zustand schaltbar ist und die Zwischenschaltung (35) bei Mittelspannung betriebsfähig ist,
- Verbinden des Hilfstransformators (20) auf seiner Primärseite mit einem Seekabel (19) zum Transportieren der Elektrizität, welche in dem Offshore-Windpark (50) erzeugt wird, in das Onshore-Stromnetz (23),
- Verbinden des Hilfstransformators (20) auf seiner Sekundärseite mit einem Hochspannungsschaltgerät (11), wobei sich das Hochspannungsschaltgerät (11) in einer offenen Position befindet,
- Verbinden des Hochspannungsschaltgerätes (11) mit dem Onshore-Stromnetz (23),
**dadurch gekennzeichnet, dass** es weiterhin die folgenden Schritte umfasst:
- Schalten des Energieverteilungselementes (10) in einen funktionsfähigen Zustand,
- Bringen des Hochspannungsschaltgerätes (11) in eine geschlossene Position,
- Bringen des Energieverteilungselementes (10) in einen nicht funktionsfähigen Zustand, dadurch Bereitstellen des Offshore-Windparks (50), welcher zu dem Onshore-Stromnetz (23) zugeschaltet ist.

2. Verfahren nach Anspruch 1, umfassend den Schritt des Bereitstellens des Hilfstransformators (20) in einem Onshore-Umspannwerk (45).

## Revendications

1. Procédé de commutation d'un réseau électrique offshore (21) d'un parc d'éoliennes offshore (50) sur un réseau électrique terrestre (23), comprenant les étapes de :
- la fourniture d'un transformateur survolteur (20) comprenant un élément de dissipation d'énergie (10) dans un circuit intermédiaire (35), dans lequel ledit élément de dissipation d'énergie (10) peut être commuté entre un état opérationnel et un état non opérationnel et ledit circuit intermédiaire (35) peut être utilisé à moyenne tension ;
- le branchement dudit transformateur survolteur (20) sur son côté primaire à un câble marin (19) pour transporter l'électricité produite dans ledit parc d'éoliennes offshore (50) vers ledit réseau électrique terrestre (23)
- le branchement dudit transformateur survolteur (20) sur son côté secondaire à un commutateur de haute tension (11), dans lequel ledit commutateur de haute tension (11) est à une position ouverte,
- le branchement dudit commutateur de haute tension (11) audit réseau électrique terrestre (23),
**caractérisé en ce qu'**il comprend en outre les étapes de :
- la commutation dudit élément de dissipation d'énergie (10) dans un état opérationnel,
- la mise dudit commutateur de haute tension (11) à une position fermée,
- la mise dudit élément de dissipation d'énergie (10) dans un état non opérationnel, en commutant de ce fait ledit parc d'éoliennes offshore (50) sur ledit réseau électrique terrestre (23).

2. Procédé selon la revendication 1, comprenant l'étape consistant à fournir ledit transformateur survolteur (20) dans un poste électrique terrestre (45).
